# EUROPÄISCHE PATENTSCHRIFT

(11) **EP 1 283 950 B1**
(45) Veröffentlichungstag und Bekanntmachung des Hinweises auf die Patenterteilung: **21.04.2004**
(21) Anmeldenummer: 01940223.9
(22) Anmeldetag: 10.05.2001
(51) Int. Cl.: F02D 41/34, F02D 41/40, F02M 63/02, F02M 59/36

(54) **VERFAHREN ZUM BESTIMMEN DER POSITION EINES KOLBENS EINER 1-ZYLINDER-HOCHDRUCKPUMPE EINES KRAFTSTOFFZUMESSSYSTEMS EINER DIREKTEINSPRITZENDEN BRENNKRAFTMASCHINE**
METHOD FOR DETERMINING THE POSITION OF A PISTON OF A 1-CYLINDER HIGH PRESSURE PUMP OF A FUEL METERING SYSTEM OF A DIRECT INJECTION INTERNAL COMBUSTION ENGINE
PROCEDE POUR DETERMINER LA POSITION D'UN PISTON SUR UNE POMPE HAUTE PRESSION MONOCYLINDRIQUE D'UN SYSTEME DOSEUR DE CARBURANT DANS UN MOTEUR A COMBUSTION INTERNE A INJECTION DIRECTE

(30) Priorität: 12.05.2000 DE 10023227
(43) Veröffentlichungstag der Anmeldung: 19.02.2003
(73) Patentinhaber: ROBERT BOSCH GMBH, 70442 Stuttgart (DE)
(72) Erfinder: JOOS, Klaus, 74399 Walheim (DE); WOLBER, Jens, 70839 Gerlingen (DE); FRENZ, Thomas, 86720 Noerdlingen (DE); AMLER, Markus, 71229 Leonberg-Gebersheim (DE); BOCHUM, Hansjoerg, Novi, MI 48377 (US)
(86) Internationale Anmeldenummer: PCT/DE2001/001771
(87) Internationale Veröffentlichungsnummer: WO 2001/086131

(56) Entgegenhaltungen:
- US-A- 4 462 361
- US-A- 4 643 155
- PATENT ABSTRACTS OF JAPAN vol. 1996, no. 09, 30. September 1996 (1996-09-30) & JP 08 121230 A (KUBOTA CORP), 14. Mai 1996 (1996-05-14)

## Beschreibung

### Stand der Technik

Die vorliegende Erfindung betrifft ein Verfahren zum Bestimmen der Position eines Kolbens einer 1-Zylinder-Hochdruckpumpe eines Kraftstoffzumesssystems einer direkteinspritzenden Brennkraftmaschine relativ zu der Winkelstellung der Kurbelwelle der Brennkraftmaschine, wobei die Fördermenge der Hochdruckpumpe durch ein ansteuerbares Mengensteuerventil eingestellt wird.

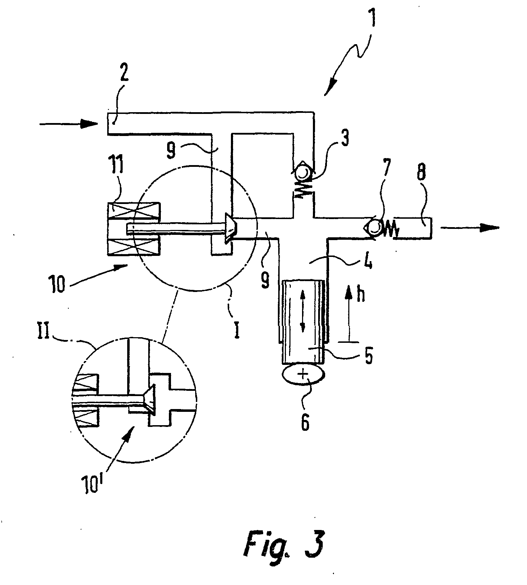

Eine an sich bekannte Hochdruckpumpe, bei der das vorliegende Verfahren Anwendung finden kann, ist in Figur 3 schematisch dargestellt. Die Hochdruckpumpe ist in ihrer Gesamtheit mit dem Bezugszeichen 1 bezeichnet. Ein Zulauf in die Hochdruckpumpe 1 von einer bspw. als Elektrokraftstoffpumpe ausgebildeten Vorförderpumpe ist mit dem Bezugszeichen 2 bezeichnet. Von dem Zulauf 2 gelangt der Kraftstoff über ein als Rückschlagventil ausgebildetes Bypassventil 3 in eine Pumpkammer 4 der Hochdruckpumpe 1. Das Volumen der Pumpkammer 4 wird nach unten hin durch einen verschiebbar geführten Kolben 5 begrenzt. Durch Hinund Herbewegen des Kolbens 5 wird das Volumen der Pumpkammer 4 vergrößert bzw. verkleinert. Der Kolben 5 wird über einen auf einer Nockenwelle drehfest befestigten Nocken 6 in eine Hin- und Herbewegung versetzt. Alternativ kann der Kolben 5 auch von einer Taumelscheibe o.ä. angetrieben werden. Aus der Pumpkammer 4 mündet über ein weiteres Rückschlagventil 7 ein Ablauf 8, über den in der Pumpkammer 4 komprimierter Kraftstoff mit Hochdruck in einen Druckspeicher des Kraftstoffzumesssystems gelangt. Des Weiteren mündet aus der Pumpkammer 4 eine Rücklaufleitung 9, die ihrerseits über ein Mengensteuerventil 10 in den Zulauf 2 der Hochdruckpumpe 1 mündet. Das Mengensteuerventil 10 wird über eine Magnetspule 11 angesteuert. Alternativ ist auch eine Ansteuerung über ein piezoelektrisches Element o.a. denkbar. Durch Ansteuerung des Mengensteuerventils 10 kann die Rücklaufleitung 9 geschlossen oder geöffnet werden.

Nachfolgend wird die Funktion der Hochdruckpumpe 1 kurz erläutert. Während einer Bewegung des Kolbens 5 nach unten (Saughub) vergrößert sich das Volumen der Pumpkammer 4, in der Pumpkammer 4 wird ein Unterdruck aufgebaut und von dem Zulauf 2 wird Kraftstoff über das Bypassventil 3 in die Pumpkammer 4 gesaugt. Am Ende des Saughubs (unterer Totpunkt UT) findet eine Bewegungsrichtungsumkehr des Kolbens 5 statt und dieser bewegt sich nun nach oben (Förderhub). Bei geschlossenem Mengensteuerventil 10 wird dabei der in der Pumpkammer 4 befindliche Kraftstoff komprimiert und es baut sich ein Druck in der Pumpkammer 4 auf. Sobald der Druck in der Pumpkammer 4 den Druck in dem Druckspeicher des Kraftstoffzumesssystems übersteigt, wird der komprimierte Kraftstoff unter Hochdruck über das weitere Rückschlagventil 7 und den Ablauf 8 zu dem Druckspeicher gefördert. Die Förderung von Kraftstoff in den Druckspeicher erfolgt nur dann, wenn die Rücklaufleitung 9 durch das Mengensteuerventil 10 geschlossen ist. Durch ein Öffnen des Mengensteuerventils 10 wird der in der Pumpkammer 4 während des Förderhubs komprimierte Kraftstoff über die Rücklaufleitung 9 und den Zulauf 2 zurück in den Niederdruckbereich des Kraftstoffzumesssystems gefördert.

In Figur 3 sind zwei unterschiedliche Ausführungsformen eines Mengensteuerventils 10 dargestellt. Mit dem Bezugszeichen 10 (Ausschnitt I in Figur 3) ist ein Mengensteuerventil bezeichnet, das entgegen des während eines Förderhubs in der Pumpkammer 4 aufgebauten Drucks schließt. Demgegenüber ist mit dem Bezugszeichen 10' (Ausschnitt II in Figur 3) ein Mengensteuerventil bezeichnet, das in Richtung des während eines Förderhubs in der Pumpkammer 4 aufgebauten Drucks schließt.

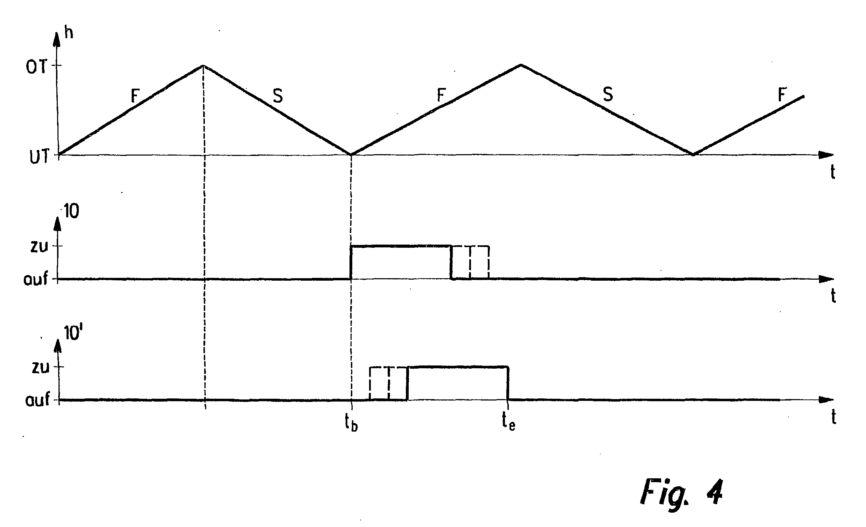

Die beiden Mengensteuerventile 10, 10' werden auf Grund ihres unterschiedlichen Aufbaus üblicherweise auch unterschiedlich angesteuert (vgl. Figur 4). In dem oberen Diagramm ist der Hub h des Kolbens 5 der Hochdruckpumpe 1 dargestellt. Mit F ist der Förderhub vom unteren Totpunkt UT bis zum oberen Totpunkt OT und mit S der Saughub vom oberen Totpunkt OT bis zum unteren Totpunkt UT bezeichnet. Das Mengensteuerventil 10 wird so angesteuert, dass es zu Beginn tb eines Förderhubs F sicher geschlossen ist und die Rücklaufleitung 9 geschlossen ist. Sobald genug Kraftstoff in den Druckspeicher des Kraftstoffzumesssystems gefördert ist, wird üblicherweise vor Erreichen des Endes te des Förderhubs F die Ansteuerung des Mengensteuerventils 10 beendet. Das Mengensteuerventil 10 wird durch den Überdruck in dem Pumpenraum geöffnet. Der Förderbeginn der Hochdruckpumpe 1 liegt bei dem Mengensteuerventil 10 somit genau bei dem unteren Totpunkt UT, das Förderende in der Regel vor dem oberen Totpunkt OT. Demgegenüber wird das Mengensteuerventil 10' erst nach dem Beginn tb des Förderhubes F und bis zum Ende te des Förderhubs F angesteuert. Bei dem Mengensteuerventil 10' liegt der Förderbeginn F also in der Regel nach dem unteren Totpunkt UT und die Förderung endet genau bei dem oberen Totpunkt OT. Hier wird das Mengensteuerventil 10' in der Regel nur zum Schließen angesteuert, bis zum oberen Totpunkt OT wird es durch den Überdruck in dem Pumpenraum zugehalten. Bei dieser Ausführung erfolgt die Füllung des Pumpenraums über das Mengensteuerventil 10', das Bypassventil 3 entfällt.

Aus den obigen Ausführungen ergibt sich, dass es für einen ordnungsgemäßen Betrieb der Brennkraftmaschine unbedingt erforderlich ist, dass die Position des Kolbens der Hochdruckpumpe, insbesondere der untere Totpunkt UT bzw. der obere Totpunkt OT des Kolbens, relativ zu der Winkelstellung der Nockenwelle, die den Kolben antreibt, und damit auch relativ zu der Winkelstellung der Kurbelwelle bekannt ist. Ansonsten ist eine genaue Ansteuerung des Mengensteuerventils und ein Festlegen des Förderbeginns genau auf den unteren Totpunkt UT des Kolbens bzw. des Förderendes genau auf den oberen Totpunkt OT des Kolbens der Hochdruckpumpe nicht möglich.

Nach der Montage einer 1-Zylinder-Hochdruckpumpe ist die genaue Position des Kolbens der Hochdruckpumpe relativ zu der Winkelstellung der Kurbelwelle unter Umständen nicht bekannt. Die exakte Kenntnis des unteren Totpunktes UT bzw. des oberen Totpunktes OT des Kolbens der Hochdruckpumpe setzt voraus, dass die Hochdruckpumpe inklusive ihrer Antriebseinheit mechanisch definiert montiert worden ist oder dass nach erfolgter Montage die Lage des unteren Totpunktes UT bzw. des oberen Totpunktes OT des Kolbens gemessen worden ist. Aus Kostengründen oder zwecks einer möglichst einfachen Montage kann es allerdings vorkommen, dass die Hochdruckpumpe mit nicht definiertem mechanischen unteren Totpunkt UT bzw. oberen Totpunkt OT montiert wird und dass außerdem eine Bestimmung der Lage des unteren Totpunktes UT bzw. des oberen Totpunktes OT des Kolbens nach der Montage entfällt.

Es ist deshalb die Aufgabe der vorliegenden Erfindung ein einfaches und effektives Verfahren zu schaffen, mit dessen Hilfe bei einer fertig montierten direkteinspritzenden Brennkraftmaschine die Position eines Kolbens einer 1-Zylinder-Hochdruckpumpe eines Kraftstoffzumesssystems der Brennkraftmaschine relativ zu der Winkelstellung der Kurbelwelle der Brennkraftmaschine bestimmt werden kann.

Zur Lösung dieser Aufgabe schlägt die Erfindung ausgehend von dem Verfahren der eingangs genannten Art vor, dass
- die Brennkraftmaschine in einem Betriebszustand betrieben wird, in dem sich ein im wesentlichen konstanter Speicherdruck in einem Druckspeicher des Kraftstoffzumesssystems einstellt;
- das Mengensteuerventil mit einem Impuls angesteuert wird, so dass sich aufgrund des Impulses eine Variation des Speicherdrucks ergibt;
- der Speicherdruck gemessen wird; und
- die Winkelstellung der Kurbelwelle bei dem oberen Totpunkt bzw. bei dem unteren Totpunkt des Kolbens aus dem Beginn und Ende der Variation des Speicherdrucks in dem Druckspeicher bestimmt wird.

Gemäß einer vorteilhaften Weiterbildung der vorliegenden Erfindung wird vorgeschlagen, dass
- die Brennkraftmaschine in einem Betriebszustand betrieben wird, in dem nur der Vorförderdruck in dem Druckspeicher des Kraftstoffzumesssystems herrscht,
- das Mengenventil mit einem Ansteuerimpuls derart gezielt angesteuert wird, dass die Hochdruckpumpe während eines Förderhubs des Kolbens für die Dauer des Ansteuerimpulses mit Hochdruck Kraftstoff in den Druckspeicher fördert, wobei der Ansteuerimpuls schrittweise über den gesamten Ansteuerbereich verschoben wird,
- der in dem Druckspeicher herrschende Speicherdruck gemessen wird, und
- aus dem Beginn und Ende des Hochdruckaufbaus in dem Druckspeicher die Winkelstellung der Kurbelwelle bei dem oberen Totpunkt OT bzw. bei dem unteren Totpunkt UT des Kolbens bestimmt wird.

### Vorteile der Erfindung

Das erfindungsgemäße Verfahren beruht auf der Überlegung, während des Betriebs der Brennkraftmaschine bei niedrigen Drehzahlen die Auswirkung einer kurzzeitigen Ansteuerung des Mengensteuerventils auf den in dem Druckspeicher herrschenden Speicherdruck zu beobachten, daraus den oberen Totpunkt OT bzw. den unteren Totpunkt UT des Kolbens zu bestimmen und dem oberen Totpunkt OT bzw. dem unteren Totpunkt UT eine Winkelstellung der Kurbelwelle zuzuordnen. Die zugeordneten Winkelstellungen werden gespeichert und in Zukunft bei der Regelung des in dem Druckspeicher herrschenden Speicherdrucks über eine Ansteuerung des Mengensteuerventils berücksichtigt.

Die Brennkraftmaschine wird in einem Betriebszustand betrieben, in dem die Hochdruckpumpe keinen Hochdruck in dem Druckspeicher des Kraftstoffzumesssystems aufbaut. In dem Druckspeicher liegt vielmehr ein Vordruck an, der von einer der Hochdruckpumpe vorgeschalteten Vorförderpumpe erzeugt wird. Die Vorförderpumpe ist bspw. als eine Elektrokraftstoffpumpe ausgebildet. Das Mengensteuerventil wird bei einer beliebigen Winkelstellung der Kurbelwelle mit einem Ansteuerimpuls gezielt angesteuert. Dadurch wird die Rücklaufleitung in der Hochdruckpumpe geschlossen und die Hochdruckpumpe fördert für die Dauer des Ansteuerimpulses mit Hochdruck Kraftstoff in den Druckspeicher, falls sich der Kolben der Hochdruckpumpe in einem Förderhub befindet, und infolgedessen steigt der Speicherdruck an. Falls sich der Kolben während der Ansteuerung des Mengensteuerventils jedoch in einem Saughub befindet, fördert die Hochdruckpumpe trotz geschlossenem Mengensteuerventil keinen Kraftstoff in den Druckspeicher und der Speicherdruck steigt nicht an.

Während der Ansteuerung des Mengensteuerventils wird der in dem Druckspeicher herrschende Speicherdruck gemessen. Kommt es infolge des Ansteuerimpulses zu einem Druckanstieg in dem Druckspeicher, kann davon ausgegangen werden, dass das Mengensteuerventil der Hochdruckpumpe während eines Förderhubs des Kolbens angesteuert worden ist. Der Druckanstieg in dem Druckspeicher wird während des weiteren Betriebs der Brennkraftmaschine auf Grund der Einspritzung von Kraftstoff über Einspritzventile in Brennräume der Brennkraftmaschine wieder abgebaut. Wenn es als Folge des nachfolgenden Ansteuerimpulses, der um einen bestimmten Winkelbetrag verschoben wurde, wiederum zu einem Druckanstieg in dem Druckspeicher kommt, kann davon ausgegangen werden, dass sich der Kolben der Hochdruckpumpe noch immer im Förderhub befindet. Wenn der Ansteuerimpuls jedoch keinen Druckanstieg in dem Druckspeicher zur Folge hat, kann davon ausgegangen werden, dass der Förderhub des Kolbens der Hochdruckpumpe zwischen der Winkelstellung der Kurbelwelle bei dem vorangegangenen Ansteuerimpuls und der Winkelstellung der Kurbelwelle des aktuellen Ansteuerimpulses beendet war und dass der obere Totpunkt OT des Kolbens irgendwo zwischen diesen beiden Winkelstellungen liegen muss.

Auf entsprechende Weise kann dann das Ende des Saughubs (unterer Totpunkt UT) des Kolbens bestimmt werden. Solange sich der Kolben im Saughub befindet, baut sich trotz Ansteuerimpuls kein Hochdruck in dem Druckspeicher auf. Sobald jedoch der Speicherdruck in Folge des Ansteuerimpulses ansteigt, kann davon ausgegangen werden, dass der Saughub beendet ist und dass der obere Totpunkt OT irgendwo zwischen der Winkelstellung des vorangegangenen Ansteuerimpulses und der Winkelstellung des aktuellen Ansteuerimpulses liegt.

Durch Messen des Speicherdrucks kann also festgestellt werden, ob sich der Kolben der Hochdruckpumpe in einem Förderhub oder in einem Saughub befindet bzw. wann er den oberen Totpunkt OT oder den unteren Totpunkt UT durchläuft.

Die Auflösung des erfindungsgemäßen Verfahrens steigt mit sinkendem Abstand zwischen zwei aufeinanderfolgenden Ansteuerimpulsen. Die Auflösung kann noch dadurch erhöht werden, dass die Winkelbereiche der Kurbelwelle, in denen nach einer ersten Messung der untere Totpunkt UT bzw. der obere Totpunkt OT des Kolbens liegt, noch einmal mit einem geringeren Abstand zwischen zwei aufeinanderfolgenden Ansteuerimpulsen durchfahren werden. Außerdem könnte die Auflösung des erfindungsgemäßen Verfahrens dadurch erhöht werden, dass die Ansteuerimpulse von aufeinanderfolgenden Messungen zeitlich versetzt zueinander angeordnet sind.

Gemäß einer vorteilhaften Ausführungsform der vorliegenden Erfindung wird vorgeschlagen, dass die Brennkraftmaschine zur Durchführung des erfindungsgemäßen Verfahrens im Leerlauf betrieben wird. Im Leerlauf wird das Mengensteuerventil der Hochdruckpumpe nicht angesteuert.

Gemäß einer weiteren vorteilhaften Ausführungsform der vorliegenden Erfindung wird vorgeschlagen, dass die Breite des Ansteuerimpulses und der Abstand zwischen zwei aufeinanderfolgenden Ansteuerimpulsen derart gewählt wird, dass sich in dem Druckspeicher einerseits während des Förderhubs des Kolbens ein messbarer Anstieg des Speicherdrucks ergibt und dieser andererseits auf Grund der Einspritzung von Kraftstoff aus dem Druckspeicher über Einspritzventile in Brennräume der Brennkraftmaschine bis zu dem nächsten Ansteuerimpuls wieder abgebaut ist. Wenn das erfindungsgemäße Verfahren durch den gesamten Ansteuerbereich des Mengensteuerventils mit Ansteuerimpulsen einer vorgegebenen Breite durchlaufen wurde, ohne dass es zu einem messbaren Druckanstieg in dem Druckspeicher gekommen wäre, muss davon ausgegangen werden, dass die gewählte Breite der Ansteuerimpulse zu gering ist. Dann wird das erfindungsgemäße Verfahren noch einmal durchlaufen, diesmal jedoch mit Ansteuerimpulsen einer größeren Breite. Falls der Abstand zwischen zwei aufeinanderfolgenden Ansteuerimpulsen nicht ausreichen sollte, den Druckanstieg in dem Druckspeicher bis zu dem nachfolgenden Ansteuerimpuls wieder abzubauen, käme es während des Förderhubs des Kolbens zu einem stetigen Druckanstieg in dem Druckspeicher, der erst während der nachfolgenden Einspritzungen von Kraftstoff in die Brennräume der Brennkraftmaschine abgebaut werden könnte. Unter diesen Umständen wäre eine genaue Bestimmung des Beginns und des Endes des Hochdruckaufbaus in dem Druckspeicher und damit eine Bestimmung des oberen Totpunktes OT bzw. des unteren Totpunktes UT des Kolbens nicht bzw. nur schwer möglich. Dann dürfte der nächste Impuls erst eine oder mehrere Einspritzungen später erfolgen.

Als eine andere vorteilhafte Weiterbildung der vorliegenden Erfindung wird vorgeschlagen, dass
- die Brennkraftmaschine in einem Betriebszustand betrieben wird, in dem die Hochdruckpumpe mit Hochdruck Kraftstoff in einen Druckspeicher des Kraftstoffzumesssystems fördert,
- das Mengensteuerventil mit einem Absteuerimpuls derart gezielt angesteuert wird, dass die Hochdruckpumpe während eines Förderhubs des Kolbens für die Dauer des Absteuerimpulses keinen Kraftstoff in den Druckspeicher fördert, wobei der Absteuerimpuls schrittweise über den gesamten Ansteuerbereich verschoben wird,
- der in dem Druckspeicher herrschende Speicherdruck gemessen wird, und
- aus dem Beginn und Ende des Hochdruckaufbaus in dem Druckspeicher die Winkelstellung der Kurbelwelle bei dem oberen Totpunkt OT bzw. dem unteren Totpunkt UT des Kolbens bestimmt wird.

Auch diese Weiterbildung beruht auf der Überlegung, die Brennkraftmaschine so zu betreiben, dass sich in dem Druckspeicher ein im Wesentlichen konstanter Druckwert einstellt, das Mengenansteuerventil kurzzeitig anzusteuern und den sich in Folge der Ansteuerung in dem Druckspeicher einstellenden Speicherdruck zu beobachten. Vorraussetzung für diese Weiterbildung ist allerdings, dass das Mengensteuerventil gegen einen Druck öffnen bzw. schließen kann.

Bei dieser Weiterbildung wird von einer Daueransteuerung des Mengensteuerventils ausgegangen. Während des Betriebs der Brennkraftmaschine steigt der in dem Druckspeicher herrschende Speicherdruck stetig an, bis ein Druckbegrenzungsventil öffnet und für einen in etwa konstanten Hochdruck sorgt. Das Mengensteuerventil wird bei beliebigen Winkelstellungen der Kurbelwelle mit einem Absteuerimpuls gezielt angesteuert.

Auf Grund des Absteuerimpulses öffnet das Mengensteuerventil, und die Hochdruckpumpe kann während des Förderhubs keinen Kraftstoff mit Hochdruck in den Druckspeicher fördern. Da währenddessen für den Betrieb der Brennkraftmaschine weiterhin Kraftstoff aus dem Druckspeicher über Einspritzventile in Brennräume der Brennkraftmaschine eingespritzt wird, kommt es zu einem Druckabfall in dem Druckspeicher. Nach dem Ende des Absteuerimpulses schließt das Mengensteuerventil wieder, die Hochdruckpumpe kann Kraftstoff in den Druckspeicher fördern und der Hochdruck baut sich wieder auf.

Während des Saughubs ist ein konstanter Druckabfall des Speicherdrucks zu registrieren, da Kraftstoff aus dem Druckspeicher in die Brennräume der Brennkraftmaschine eingespritzt wird, ohne dass die Hochdruckpumpe neuen Kraftstoff in den Druckspeicher fördert. Ein Absteuerimpuls während des Saughubs bleibt ohne Auswirkung auf den Speicherdruck.

Durch Messung des in dem Druckspeicher herrschenden Speicherdrucks kann der Druckverlauf beobachtet werden. Aus dem Beginn und dem Ende des Hochdruckabfalls in dem Druckspeicher kann der obere Totpunkt OT bzw. der untere Totpunkt UT des Kolbens bestimmt und einer bestimmten Winkelstellung der Kurbelwelle zugeordnet werden.

Gemäß einer besonders bevorzugten Ausführungsform der vorliegenden Erfindung wird vorgeschlagen, dass die Breite des Absteuerimpulses und der Abstand zwischen zwei aufeinanderfolgenden Absteuerimpulsen derart gewählt wird, dass sich in dem Druckspeicher einerseits ein messbarer Abfall des Speicherdrucks ergibt und andererseits der Hochdruck auf Grund der Förderung von Kraftstoff in den Druckspeicher durch die Hochdruckpumpe während des Förderhubs des Kolbens bis zu dem nächsten Absteuerimpuls wieder aufgebaut ist.

Gemäß einer anderen bevorzugten Ausführungsform der vorliegenden Erfindung wird vorgeschlagen, dass die Breite der Impulse im Bereich zwischen 5° und 30° Winkelstellung der Kurbelwelle gewählt wird. Vorteilhafterweise wird der Impuls in Schritten im Bereich zwischen 10° und 40° Winkelstellung der Kurbelwelle über den gesamten Ansteuerbereich verschoben.

Zur Erhöhung der Auflösung des Verfahrens wird vorgeschlagen, dass das Verfahren nach erfolgreicher Bestimmung der Position des Kolbens im Rahmen eines ersten Durchlaufs noch einmal mit Impulsen durchlaufen wird, die gegenüber den Impulsen des ersten Durchlaufs um einen Abstand versetzt sind, wobei der Abstand im Bereich zwischen 2° und 20° Winkelstellung der Kurbelwelle gewählt wird.

Von besonderer Bedeutung ist die Realisierung des erfindungsgemäßen Verfahrens in der Form eines Steuerelements, das für ein Steuergerät einer Brennkraftmaschine insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. ein Read-Only-Memory (ROM) oder ein Flash-Memory.

### Zeichnung

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Ablaufdiagramm eines erfindungsgemäßen Verfahrens gemäß einer bevorzugten Ausführungsform;

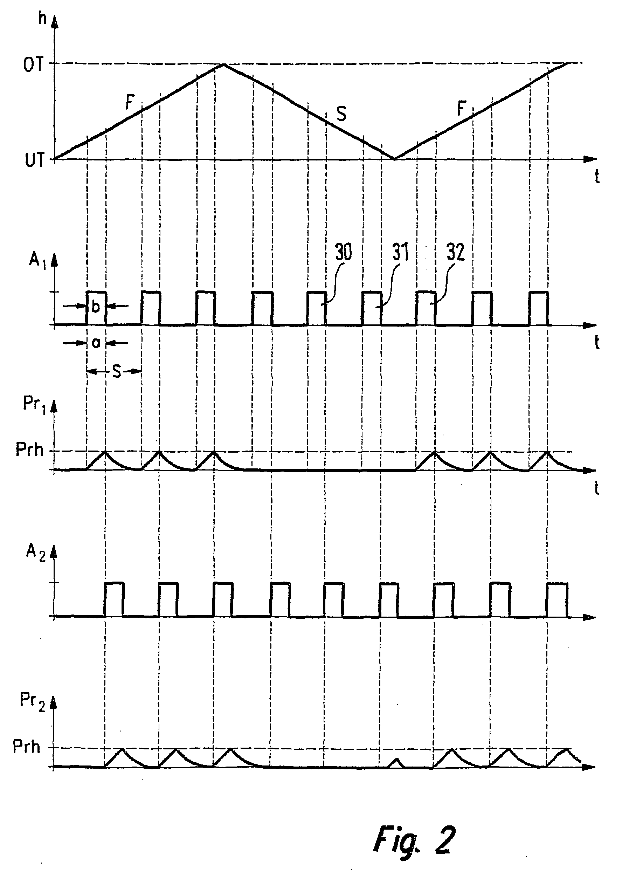

- Figur 2: verschiedene Signalverläufe während des erfindungsgemäßen Verfahrens;
- Figur 3: eine an sich aus dem Stand der Technik bekannte Hochdruckpumpe, an der das erfindungsgemäße Verfahren ausgeführt werden kann; und
- Figur 4: verschiedene Signalverläufe während der Ansteuerung eines Mengensteuerventils der Hochdruckpumpe aus Figur 3.

### Beschreibung der Ausführungsbeispiele

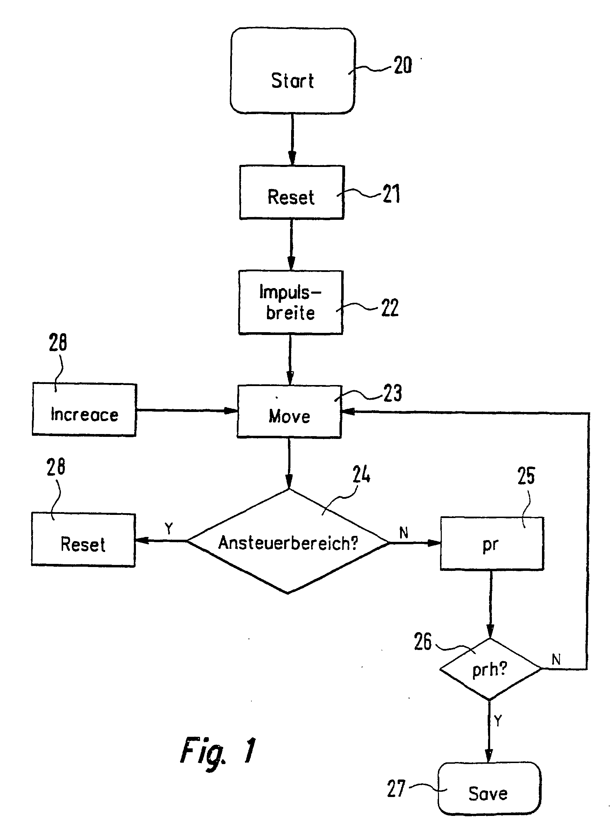

In Figur 1 ist ein Ablaufdiagramm des erfindungsgemäßen Verfahrens dargestellt. Das Verfahren dient dazu, bei einer fertig montierten direkteinspritzenden Brennkraftmaschine die Position eines Kolbens 5 einer 1-Zylinder-Hochdruckpumpe 1 eines Kraftstoffzumesssystems der Brennkraftmaschine relativ zu der Winkelstellung der Kurbelwelle der Brennkraftmaschine auf einfache Weise zu bestimmen. Dadurch ist eine genaue Ansteuerung eines Mengensteuerventils 10, 10' der Hochdruckpumpe 1 und ein Festlegen des Förderbeginns genau auf den unteren Totpunkt UT des Kolbens 5 bzw. des Förderendes genau auf den oberen Totpunkt OT des Kolbens 5 möglich. Das wiederum erlaubt eine besonders genaue Zudosierung von Kraftstoff in die Brennräume der Brennkraftmaschine, was mit einem geringen Kraftstoffverbrauch und einem guten Emissions- und Geräuschverhalten der Brennkraftmaschine verbunden ist.

Das erfindungsgemäße Verfahren beruht auf der Überlegung, während des Betriebs der Brennkraftmaschine einen im wesentlichen konstanten Speicherdruck in dem Druckspeicher zu erzeugen, die Auswirkung einer kurzzeitigen Ansteuerung des Mengensteuerventils 10, 10' auf den Speicherdruck zu beobachten, daraus den oberen Totpunkt OT bzw. den unteren Totpunkt UT des Kolbens 5 zu bestimmen und dem oberen Totpunkt OT bzw. dem unteren Totpunkt UT eine Winkelstellung der Kurbelwelle zuzuordnen. Die zugeordneten Winkelstellungen werden gespeichert und in Zukunft bei der Regelung des in dem Druckspeicher herrschenden Speicherdrucks über eine Ansteuerung des Mengensteuerventils 10, 10' berücksichtigt.

Das erfindungsgemäße Verfahren wird in Figur 1 am Beispiel der Bestimmung des unteren Totpunkts UT des Kolbens 5 der Hochdruckpumpe 1 näher erläutert. Es beginnt in einem Funktionsblock 20 (Start). In einem nachfolgenden Funktionsblock 21 wird der Ansteuerbeginn auf einen Ausgangswert zurückgesetzt (Reset). In einem Funktionsblock 22 wird dann ein Ansteuerimpuls A1 für die Magnetspule 11 des Mengensteuerventils 10, 10' mit minimaler Breite b erzeugt (Impulsbreite). Im vorliegenden Ausführungsbeispiel entspricht die Impulsbreite b 10° Winkelstellung der Kurbelwelle (vgl. Figur 4). Der Ansteuerbeginn liegt bspw. bei dem Ansteuerimpuls 30, der einer Winkelstellung der Kurbelwelle von etwa 135° entspricht. Dann wird der Ansteuerimpuls in einem Funktionsblock 23 um ein Schritt s von 30° Winkelstellung der Kurbelwelle verschoben und bei der nächsten Umdrehung ausgegeben (Ansteuerimpuls 31 in vgl. Figur 4).

In einem anschließenden Abfrageblock 24 wird überprüft, ob der Ansteuerbereich vollständig durchlaufen ist. Der Ansteuerbereich entspricht 180° Winkelstellung der Kurbelwelle und umfasst einen Förderhub F und einen Saughub S des Kolbens 5. Da der Ansteuerbeginn bei dem Ansteuerimpuls 30 lag, ist der Ansteuerbereich noch nicht vollständig durchlaufen. Deshalb wird in einem Funktionsblock 25 der in dem Druckspeicher anliegende Speicherdruck pr gemessen. Danach wird in einem Abfrageblock 26 überprüft, ob ein Hochdruck pr_h anliegt. Da der Ansteuerimpuls 31 während eines Saughubs S des Kolbens 5 der Hochdruckpumpe 1 an dem Mengensteuerventil 10, 10' anliegt, liegt kein Hochdruck pr_h an. Deshalb wird wieder zu dem Funktionsblock 23 verzweigt und der Ansteuerimpuls A1 um einen Schritt s (30° Winkelstellung der Kurbelwelle) verschoben (Ansteuerimpuls 32).

In dem Abfrageblock 24 wird wieder zu Funktionsblock 25 verzweigt, da der Ansteuerbereich noch nicht vollständig durchlaufen ist. In dem Abfrageblock 26 wird festgestellt, dass in dem Druckspeicher ein Hochdruck pr_h anliegt (vgl. Figur 4). Das bedeutet, dass der Saughub S beendet ist und sich der Kolben 5 nunmehr in einem Förderhub F befindet. In einem Funktionsblock 27 wird die dem aktuellen Ansteuerbeginn des Ansteuerimpulses entsprechende Winkelstellung der Kurbelwelle - in dem vorliegenden Ausführungsbeispiel 195° bzw. 15° - als unterer Totpunkt UT gespeichert und das Verfahren zum Bestimmen des unteren Totpunktes UT ist hier beendet.

Falls in dem Abfrageblock 24 festgestellt wird, dass der Ansteuerbereich bereits vollständig durchlaufen ist, ohne dass ein in Funktionsblock 25 messbarer Hochdruck pr_h in dem Druckspeicher aufgebaut werden konnte, wird zu Funktionsblock 28 verzweigt, wo der Ansteuerbeginn auf den Ausgangswert zurückgesetzt wird. Dann wird in einem Funktionsblock 29 die Breite b der Ansteuerimpulse A1 vergrößert und der Ansteuerbereich noch einmal durchlaufen, so lange bis ein Hochdruck pr_h in dem Druckspeicher aufgebaut wird.

In entsprechender Weise kann auch der obere Totpunkt OT des Kolbens 5 bestimmt werden, indem das Ende des Förderhubs F ermittelt wird. Das Ende des Förderhubs F ist dann erreicht, wenn sich kein Hochdruck pr_h mehr in dem Druckspeicher aufbaut.

Zur Erhöhung der Auflösung kann das Verfahren nach erfolgreicher Ermittlung des unteren Totpunktes UT bzw. des oberen Totpunktes OT noch einmal mit Ansteuerimpulsen A2 durchlaufen werden, die um 10° Winkelstellung versetzt zu den Ansteuerimpulsen A1 sind. Der zweite Durchlauf kann auf die Winkelbereiche der Kurbelwelle beschränkt werden, in denen nach dem Ergebnis des ersten Durchlaufs der untere Totpunkt UT bzw. der obere Totpunkt liegt.

Bei dem erfindungsgemäßen Verfahren ist eine mechanisch definierte Montage der Hochdruckpumpe 1 inklusive ihrer Antriebseinheit (Nocken 6) oder eine aufwendige Messung der Lage des unteren Totpunktes UT bzw. des oberen Totpunktes OT des Kolbens 5 nach erfolgter Montage nicht notwendig. Vielmehr wird bei dem erfindungsgemäßen Verfahren die Position des Kolbens 5 an der fertig montierten Brennkraftmaschine - bspw. am Bandende - auf einfache Weise bestimmt.

## Patentansprüche

1. Verfahren zum Bestimmen der Position eines Kolbens (5) einer 1-Zylinder-Hochdruckpumpe (1) eines Kraftstoffzumesssystems einer direkteinspritzenden Brennkraftmaschine relativ zu der Winkelstellung der Kurbelwelle der Brennkraftmaschine, wobei die Fördermenge der Hochdruckpumpe (1) durch ein ansteuerbares Mengensteuerventil (10; 10') eingestellt wird, **dadurch gekennzeichnet, dass**
- die Brennkraftmaschine in einem Betriebszustand betrieben wird, in dem sich ein im wesentlichen konstanter Speicherdruck (pr) in einem Druckspeicher des Kraftstoffzumesssystems einstellt;
- das Mengensteuerventil (10; 10') mit einem Impuls (A1; A2) angesteuert wird, so dass sich aufgrund des Impulses (A1; A2) eine Variation des Speicherdrucks (pr) ergibt;
- der Speicherdruck (pr) gemessen wird; und
- die Winkelstellung der Kurbelwelle bei dem oberen Totpunkt (OT) bzw. bei dem unteren Totpunkt (UT) des Kolbens (5) aus dem Beginn und Ende der Variation des Speicherdrucks (pr) in dem Druckspeicher bestimmt wird.

2. Verfahren nach Anspruch 1, **dadurch gekennzeichnet, dass**
- die Brennkraftmaschine in einem Betriebszustand betrieben wird, in dem nur der Vorförderdruck in dem Druckspeicher des Kraftstoffzumesssystems herrscht,
- das Mengensteuerventil (10; 10') mit einem Ansteuerimpuls (A1; A2) derart gezielt angesteuert wird, dass die Hochdruckpumpe (1) während eines Förderhubs (F) des Kolbens (5) für die Dauer des Ansteuerimpulses (A1; A2) mit Hochdruck Kraftstoff in den Druckspeicher fördert, wobei der Ansteuerimpuls (A1; A2) schrittweise über den gesamten Ansteuerbereich verschoben wird,
- der in dem Druckspeicher herrschende Speicherdruck (pr) gemessen wird, und
- aus dem Beginn und Ende des Hochdruckaufbaus in dem Druckspeicher die Winkelstellung der Kurbelwelle bei dem oberen Totpunkt (OT) bzw. bei dem unteren Totpunkt (UT) des Kolbens (5) bestimmt wird.

3. Verfahren nach Anspruch 2, **dadurch gekennzeichnet, dass** die Brennkraftmaschine zur Durchführung des Verfahrens im Leerlauf betrieben wird.

4. Verfahren nach Anspruch 2 oder 3, **dadurch gekennzeichnet, dass** die Breite (b) des Ansteuerimpulses (A1; A2) und der Abstand (a) zwischen zwei aufeinander folgenden Ansteuerimpulsen (A1; A2) derart gewählt wird, dass sich einerseits in dem Druckspeicher während des Förderhubs (F) des Kolbens (5) ein messbarer Anstieg des Speicherdrucks (pr) ergibt und dieser andererseits aufgrund der Einspritzung von Kraftstoff aus dem Druckspeicher über Einspritzventile in Brennräume der Brennkraftmaschine bis zu dem nächsten Ansteuerimpuls wieder abgebaut ist.

5. Verfahren nach Anspruch 1, **dadurch gekennzeichnet, dass**
- die Brennkraftmaschine in einem Betriebszustand betrieben wird, in dem die Hochdruckpumpe (1) mit Hochdruck Kraftstoff in einen Druckspeicher des Kraftstoffzumesssystems fördert,
- das Mengensteuerventil (10; 10') mit einem Absteuerimpuls derart gezielt angesteuert wird, dass die Hochdruckpumpe (1) während eines Förderhubs (F) für die Dauer des Absteuerimpulses keinen Kraftstoff in den Druckspeicher fördert, wobei das Absteuerimpuls schrittweise über den gesamten Ansteuerbereich verschoben wird,
- der in dem Druckspeicher herrschende Speicherdruck (pr) gemessen wird, und
- aus dem Beginn und Ende des Hochdruckabfalls in dem Druckspeicher die Winkelstellung der Kurbelwelle bei dem oberen Totpunkt (OT) bzw. dem unteren Totpunkt (UT) des Kolbens bestimmt wird.

6. Verfahren nach Anspruch 5, **dadurch gekennzeichnet, dass** die Breite (b) des Absteuerimpulses und der Abstand (a) zwischen zwei aufeinander folgenden Absteuerimpulsen derart gewählt wird, dass sich einerseits in dem Druckspeicher ein messbarer Abfall des Speicherdrucks (pr) ergibt und andererseits der Hochdruck aufgrund der Förderung von Kraftstoff in den Druckspeicher durch die Hochdruckpumpe (1) während des Förderhubs (F) bis zu dem nächsten Absteuerimpuls wieder aufgebaut ist.

7. Verfahren nach einem der Ansprüche 2 bis 6, **dadurch gekennzeichnet, dass** die Breite (b) der Impulse im Bereich zwischen 5° und 30° Winkelstellung der Kurbelwelle gewählt wird.

8. Verfahren nach einem der Ansprüche 2 bis 7, **dadurch gekennzeichnet, dass** der Impuls in Schritten (s) im Bereich zwischen 10° und 40° Winkelstellung der Kurbelwelle über den gesamten Ansteuerbereich verschoben wird.

9. Verfahren nach einem der Ansprüche 1 bis 7, **dadurch gekennzeichnet, dass** das Verfahren nach erfolgreicher Bestimmung der Position des Kolbens (5) im Rahmen eines ersten Durchlaufs noch einmal mit Impulsen (A2) durchlaufen wird, die gegenüber den Impulsen (A1) des ersten Durchlaufs um einen Abstand (a) versetzt sind, wobei der Abstand (a) im Bereich zwischen 2° und 20° Winkelstellung der Kurbelwelle gewählt wird.

10. Steuerelement, insbesondere Read-Only-Memory (ROM) oder Flash-Memory, für ein Steuergerät einer Brennkraftmaschine insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem vorangehenden Ansprüche geeignet ist.

## Claims

1. Method for determining the position of a piston (5) of a single-cylinder high-pressure pump (1) of a fuel metering system of a direct-injection internal combustion engine in relation to the angular position of the crankshaft to the internal combustion engine, the delivered quantity of the high-pressure pump (1) being set by an actuable quantity control valve (10; 10'), **characterized in that**
- the internal combustion engine is operated in an operating state in which a substantially constant storage pressure (pr) is set in a pressure accumulator of the fuel metering system;
- the quantity control valve (10; 10') is actuated by a pulse (A1; A2) so that the storage pressure (pr) is varied owing to the pulse (A1; A2);
- the storage pressure (pr) is measured; and
- the angular position of the crankshaft is determined at the top dead centre (OT) and at the bottom dead centre (UT) of the piston (5) from the start and end of the variation of the storage pressure (pr) in the pressure accumulator.

2. Method according to Claim 1, **characterized in that**
- the internal combustion engine is operated in an operating state in which only the predelivery pressure obtains in the pressure accumulator of the fuel metering system,
- the quantity control valve (10; 10') is actuated with an actuation pulse (A1; A2) in a selective fashion such that the high-pressure pump (1) delivers fuel into the pressure accumulator at high pressure during a delivery stroke (F) of the piston (5) for the duration of the actuation pulse (A1; A2), the actuation pulse (A1; A2) being incrementally displaced over the entire actuation range,
- the storage pressure (pr) which obtains in the pressure accumulator is measured, and
- the angular position of the crankshaft is determined at the top dead centre (OT) and at the bottom dead centre (UT) of the piston (5) from the start and end of the build up of high pressure in the pressure accumulator.

3. Method according to Claim 2, **characterized in that** the internal combustion engine is operated in idling mode in order to carry out the method.

4. Method according to Claim 2 or 3, **characterized in that** the width (b) of the actuation pulse (A1; A2) and the distance (a) between two successive actuation pulses (A1; A2) is selected such that, on the one hand, a measurable rise in the storage pressure (pr) takes place in the pressure accumulator during the delivery stroke (F) of the piston (5), and on the other hand said measurable rise is dissipated again on the basis of the injection of fuel from the pressure accumulator via injection valves into combustion chambers of the internal combustion engine up to the next actuation pulse.

5. Method according to Claim 1, **characterized in that**
- the internal combustion engine is operated in an operating state in which the high-pressure pump (1) delivers fuel into a pressure accumulator of the fuel metering system at high pressure,
- the quantity control valve (10; 10') is actuated with a shut-off pulse in a selective fashion such that the high-pressure pump (1) does not deliver any fuel into the pressure accumulator during a delivery stroke (F) for the duration of the shut-off pulse, the shut-off pulse being incrementally displaced over the entire actuation range,
- the storage pressure (pr) which obtains in the pressure accumulator is measured, and
- the angular position of the crankshaft is determined at the top dead centre (OT) and at the bottom dead centre (UT) of the piston from the start and end of the drop in the high pressure in the pressure accumulator.

6. Method according to Claim 5, **characterized in that** the width (b) of the shut-off pulse and the distance
(a) between two successive shut-off pulses is selected such that, on the one hand, a measurable drop in the storage pressure (pr) takes place in the pressure accumulator, and on the other hand the high pressure is built up again on the basis of the delivery of fuel into the pressure accumulator by the high-pressure pump (1) during the delivery stroke (F) up to the next shut-off pulse.

7. Method according to one of Claims 2 to 6, **characterized in that** the width (b) of the pulses is selected in the range between 5° and 30° angular position of the crankshaft.

8. Method according to one of Claims 2 to 7, **characterized in that** the pulse is displaced in increments (s) in the region between 10° and 40° angular position of the crankshaft over the entire actuation range.

9. Method according to one of Claims 1 to 7, **characterized in that**, after the position of the piston (5) has been successfully determined, the method is run through once again, within the scope of a first pass, with pulses (A2) which are displaced by a distance (a) with respect to the pulses (A1) of the first pass, the distance (a) being selected in the region between 2° and 20° angular position of the crankshaft.

10. Control element, in particular read-only memory (ROM) or flash memory, for a control device of an internal combustion engine, in particular of a motor vehicle, on which a program is stored which can run on a computing device, in particular on a microprocessor, and which is suitable for carrying out a method according to one of the preceding claims.

## Revendications

1. Procédé pour déterminer la position d'un piston (5) sur une pompe haute pression monocylindrique (1) d'un système doseur de carburant dans un moteur à combustion interne à injection directe par rapport à la position angulaire du vilebrequin du moteur, dans lequel le débit de refoulement de la pompe haute pression (1) est réglé par une soupape de commande de débit (10; 10') pouvant être activée,
**caractérisé en ce que**
- le moteur à combustion interne fonctionne dans un état de fonctionnement dans lequel une pression d'accumulateur sensiblement constante (pr) s'établit dans un accumulateur de pression du système doseur de carburant;
- la soupape de commande de débit (10; 10') est activée avec une impulsion (A1; A2), de telle façon qu'il se produise une variation de la pression d'accumulateur (pr) par suite de l'impulsion (A1; A2);
- la pression d'accumulateur (pr) est mesurée; et
- la position angulaire du vilebrequin pour le point mort haut (OT) ou pour le point mort bas (UT) du piston (5) est déterminée à partir du commencement et de la fin de la variation de la pression d'accumulateur (pr) dans l'accumulateur de pression.

2. Procédé selon la revendication 1,
**caractérisé en ce que**
- le moteur à combustion interne fonctionne dans un état de fonctionnement, dans lequel seule la pression initiale de refoulement règne dans l'accumulateur de pression du système doseur de carburant,
- la soupape de commande de débit (10; 10') est activée de manière sélective avec une impulsion d'amorçage (A1; A2) de telle manière que la pompe haute pression (1) refoule du carburant sous haute pression dans l'accumulateur de pression pendant une course de refoulement (F) du piston (5) pendant la durée de l'impulsion d'amorçage (A1; A2), l'impulsion d'amorçage (A1; A2) étant déplacée pas à pas sur toute la plage d'amorçage;
- la pression d'accumulateur (pr) régnant dans l'accumulateur de pression est mesurée; et
- la position angulaire du vilebrequin pour le point mort haut (OT) ou pour le point mort bas (UT) du piston (5) est déterminée à partir du commencement et de la fin de l'établissement de la haute pression dans l'accumulateur de pression.

3. Procédé selon la revendication 2,
**caractérisé en ce que**
le moteur à combustion interne pour la mise en oeuvre du procédé fonctionne au ralenti.

4. Procédé selon la revendication 2 ou 3,
**caractérisé en ce que**
la largeur (b) de l'impulsion d'amorçage (A1; A2) et l'écart (a) entre deux impulsions d'amorçage (A1; A2) successives sont choisis de telle façon que d'une part une hausse mesurable de la pression d'accumulateur (pr) se produise dans l'accumulateur de pression pendant la course de refoulement (F) du piston (5) et que d'autre part celle-ci soit à nouveau abaissée jusqu'à la prochaine impulsion d'amorçage par suite de l'injection de carburant hors de l'accumulateur de pression par des soupapes d'injection dans des chambres de combustion du moteur.

5. Procédé selon la revendication 1,
**caractérisé en ce que**
- le moteur à combustion interne fonctionne dans un état de fonctionnement, dans lequel la pompe haute pression (1) refoule du carburant sous haute pression dans un accumulateur de pression du système doseur de carburant,
- la soupape de commande de débit (10; 10') est activée de manière sélective avec une impulsion de désamorçage de telle manière que la pompe haute pression (1) ne refoule pas de carburant dans l'accumulateur de pression pendant une course de refoulement (F) pendant la durée de l'impulsion de désamorçage, l'impulsion de désamorçage étant déplacée pas à pas sur toute la plage d'amorçage;
- la pression d'accumulateur (pr) régnant dans l'accumulateur de pression est mesurée; et
- la position angulaire du vilebrequin pour le point mort haut (OT) ou pour le point mort bas (UT) du piston est déterminée à partir du commencement et de la fin de la baisse de la haute pression dans l'accumulateur de pression.

6. Procédé selon la revendication 5,
**caractérisé en ce que**
la largeur (b) de l'impulsion de désamorçage et l'écart (a) entre deux impulsions de désamorçage successives sont choisis de telle façon que d'une part une baisse mesurable de la pression d'accumulateur (pr) dans l'accumulateur de pression se produise et que d'autre part, la haute pression soit à nouveau rétablie jusqu'à la prochaine impulsion de désamorçage par suite du refoulement de carburant dans l'accumulateur de pression par la pompe haute pression (1) pendant la course de refoulement (F).

7. Procédé selon l'une quelconque des revendications 2 à 6,
**caractérisé en ce que**
la largeur (b) des impulsions est choisie dans la plage comprise entre 5° et 30° de position angulaire du vilebrequin.

8. Procédé selon l'une quelconque des revendications 2 à 7,
**caractérisé en ce que**
l'impulsion est déplacée en pas (s) sur toute la plage d'amorçage dans la plage comprise entre 10° et 40° de position angulaire du vilebrequin.

9. Procédé selon l'une quelconque des revendications 1 à 7,
**caractérisé en ce qu'**
après avoir effectué la détermination de la position du piston (5) dans le cadre d'une première exécution, le procédé est exécuté à nouveau avec des impulsions (A2), qui sont décalées d'un écart (a) par rapport aux impulsions (A1) de la première exécution, l'écart (a) étant choisi dans la plage comprise entre 2° et 20° de position angulaire du vilebrequin.

10. Elément de commande, en particulier mémoire morte (Read-Only-Memory = ROM) ou mémoire instantanée, pour un appareil de commande d'un moteur à combustion interne en particulier d'un véhicule automobile, dans lequel est chargé un programme qui peut tourner sur un calculateur, en particulier sur un microprocesseur, et qui convient pour la mise en oeuvre d'un procédé selon l'une quelconque des revendications précédentes.
